# EUROPEAN PATENT SPECIFICATION

(11) **EP 2 402 102 B1**
(45) Date of publication and mention of the grant of the patent: **26.03.2014**
(21) Application number: 10746120.4
(22) Date of filing: 17.02.2010
(51) Int. Cl.: B23K 1/08, H05K 3/34, B23K 101/42

(54) **JET SOLDER BATH**
DÜSENLÖTBAD
BAIN DE MÉTAL D'APPORT POUR BRASAGE À JET

(30) Priority: 25.02.2009 JP 2009042603
(43) Date of publication of application: 04.01.2012
(73) Proprietor: Senju Metal Industry Co., Ltd, Tokyo 120-8555 (JP)
(72) Inventor: ICHIKAWA, Hirokazu, Tokyo 120-8555 (JP); OHTASHIRO, Tadayoshi, Tokyo 120-8555 (JP); KIMOTO, Shunsuke, Tokyo 120-8555 (JP)
(74) Representative: Ealey, Douglas Ralph
(86) International application number: PCT/JP2010/052359
(87) International publication number: WO 2010/098239

(56) References cited:
- JP-A- 5 318 104
- JP-A- 49 097 751
- JP-A- 2005 007 405
- JP-A- 2005 074 478
- US-A- 3 732 063

## Description

The present invention relates to a jet solder bath that spouts molten solder to a printed circuit board and forms solder on a predetermined position of the printed circuit boared, as known from US-A-3732063.

### Background Art

As a soldering method by which solder is formed on the printed circuit board, there is a dip method which performs soldering by making the molted solder contact with the printed circuit board. This dip method performs the soldering by processing of applying flux onto the printed circuit board by a fluxer installed in a soldering apparatus, previously heating the applied portion by a preheater, adhering the molten solder in a jet solder bath, and performing cooling using a cooling apparatus.

The jet solder bath installed in the soldering apparatus is constituted of a bath main body portion containing the solder, a jet nozzle, a duct connected to the jet nozzle, a pump mounted on an end of the duct and the like. In this jet solder bath, the solder contained in the bath main body portion is melted by an electric heater and this molten solder is dispatched into the duct by the pump. The jet solder bath then performs the soldering by spouting it from the jet nozzle connected to the duct and making this spouted molten solder contact with the printed circuit board.

Material consisting of the bath main body portion is in general a stainless steel. The stainless steel is an alloy of iron (Fe), nickel (Ni), chrome (Cr) and the like and an oxidized film of Cr is formed on a surface thereof, on which the molten solder is difficult to be adhered. However, even if the molten solder is difficult to be adhered on the stainless steel, the molten solder may be adhered on the stainless steel when a surface thereof is scratched so that the oxidized film of Cr peels off or the oxidized film of Cr is removed by the flux.

If the stainless steel adheres the molted solder, there occurs "erosion" that is a phenomenon in which the stainless steel begins to dissolve in the molten solder. This erosion occurs such that tin Sn contained in the solder is alloyed with Fe, Ni, and/or Cr in the stainless steel and they dissolve gradually in the molten solder. If the erosion progresses, in plate-like stainless steel, eventually a hole forms or periphery area may be dissolved so as to be lost. If the erosion occurs in the solder bath, the molted solder heated to a high temperature spills out of the solder bath so that a surface of the floor may be scorched and/or the wiring of the soldering apparatus may be scorched so as to be short-circuited.

A reason why the erosion occurs is so explained that there is a lot of quantity of Sn constituent in solder, Fe, Ni or Cr contained in the stainless steel is melted to Sn, resulting in forming an alloy which has a melting point lower than that of the stainless steel, and this alloy is subject to dissolving in the molted solder.

Portions of the jet solder bath where the erosion is subject to occurring are the bath main body portion, the duct, an impeller provided in the pump, a rectifier, a jet nozzle and the like. In other words, the erosion occurs in the portions which are locally put at a high temperature or which the molten solder hit with great strength.

The bath main body portion is heated so as to become a high temperature when turning on an electric heater thereof. The electric heater is set so that its temperature is not lower than 500 °C if a melting point of lead-free solder is, for example, 220 °C. In this case, the bath main body portion contacting the electric heater becomes 300 °C or more. When completing soldering operation to turn off the electric heater so that the lead-free solder is solidified, temperatures of lead-free solder and bath main body portion fall to a room temperature.

Thus, by a repetition of high temperature during the soldering operation and low temperature after the operation completion, the oxidized film of Cr formed on a surface of the stainless steel is broken out because the solder and the stainless steel are rubbed by expansion and contraction of the solder and the stainless steel based on the difference in the coefficient of thermal expansion between them. Then, from a portion in which the oxidized film of Cr is broken out, the molten solder is run thereinto, and the erosion occurs in the stainless steel. Further, when the stainless steel is heated to higher temperature, strength of the oxidized film of Cr decreases so that it is further subject to the erosion by the solder.

By the way, although conventional solder of Pb-63Sn has been often used, erosion has not clearly occurred in this solder of Pb-63Sn because its Sn content is about sixty percent. However, the use of solder of Pb-63Sn has been restricted based on an instruction by Restriction of Hazardous Substances (RoHS) because it has a risk of causing lead poisoning.

When electronic equipment using any lead solder has gone wrong or has not become easy to use because of old type, it has been used in land reclamation without repairing it or improving its function or the like, but a lead component of solder dissolves if acid rain contacts a printed circuit board thus used in the land reclamation and the acid rain containing the lead component is mixed into underground water. If such underground water containing the lead component is drunk over a period of many years, there may be a risk of causing the lead poisoning. As a result thereof, lead-free solder in which any lead is not contained has been used but the Sn content in the lead-free solder is 90 percent or more so that since it has larger Sn content than that of the conventional lead solder, the erosion is more subject to occurring in the stainless steel (see Non-Patent Document 1).

As means for preventing the erosion of the bath main body portion, an applicant of this application has disclosed a solder bath in which nitriding is performed on a bottom surface of bath main body portion and a surface of the stainless steel of the portions which the molten solder hit with great strength (see Patent Document 1). Further, in order to prevent bath main body portion from being locally heated, a heat conduction plate made of stainless or the like is provided between a bath main body portion and a heater, thereby enabling the bath main body portion to be uniformly heated (see Patent Document 2).

### Prior Art Documents

### Patent Documents

Patent Document 1: Japanese Patent Application Publication No.2004-9127; and
Patent Document 2: Japanese Patent Application Publication No. 2005-7405.

### Non-Patent Document

Non-patent Document 1: "Erosion in Stainless Steel by Lead-free Solder" by Tadashi Takemoto, P120-126 of Electronic Materials published as an independent volume in July, 2004.

### Disclosure of the Invention

### Problems to be solved by the Invention

Although the solder to be used in the jet solder bath has conventionally been Sn-Pb solder, so-called lead-free solder in which any lead is not used has been replaced therewith by taking environment into consideration. Since the lead-free solder has the Sn content of 90 percent or more, which is a larger than that of the conventional lead solder, it has a problem such that the erosion is more subject to occurring in the stainless steel.

Further, according to the patent document 1, as the method for preventing the erosion in the jet solder bath by the lead-free solder, a solder bath in which nitriding is performed on a surface of the stainless steel of the bath main body portion is used. Since nitrided film formed by the nitriding is, however, thin, the solder is adhered to a surface of the stainless steel of the bath main body portion if the nitrided film is flawed once, so that the erosion is subject to occurring therein. Particularly, in the portions which are locally heated to a high temperature, such as that of the bath main body portion or the like contacting a heater, an erosion occurs in the bath main body portion when the nitrided film formed on the surface of the stainless steel by the nitriding is rubbed and peeled off.

Further, according to the patent document 2, as the method for preventing the bath main body portion contacting the heater from being locally heated, the heat conduction plate made of stainless or the like is provided between the bath main body portion and the heater. However, the amount of heat based on generation of heat by the heater is lost in the heat conduction plate so tat it takes much time to increase temperature of the jet solder bath.

The invention, then, solves the problems thus above-mentioned, and has an object to provide a jet solder bath in which no erosion occurs even if the solder to be used in the jet solder bath is a lead-free solder, the Sn content of which is 90 mass percent or more.

### Means for solving the Problems

Inventors have found out that no erosion occurs in a bath main body portion contacting a heater unless the heater locally heats in excess to complete this invention as a method for preventing an erosion by lead-free solder from occurring in the jet solder bath.

A jet solder bath according to the invention is a jet solder bath which flows molten solder by feeding and compressing means to spout it from a nozzle, **characterized in that** the bath comprises a bath main body portion that contains solder, a temperature-detecting portion that detects a temperature of the solder contained in the bath main body portion, a first heater portion that is provided on the bath main body portion and heats the bath main body portion, a second heater portion that is provided on the bath main body portion, is juxtaposed with the first heater portion and heats the bath main body portion, and a control portion that drives both of the first and second heater portions until the temperature of the solder which the temperature-detecting portion detects reaches a predetermined temperature and drives the first and second heater portions alternately after it has reached the predetermined temperature.

In the jet solder bath according to the invention, the temperature-detecting portion detects a temperature of the solder contained in the bath main body portion, the first heater portion is provided on the bath main body portion and heats the bath main body portion, and the second heater portion is provided on the bath main body portion, is juxtaposed with the first heater portion and heats the bath main body portion. On the assumption of this, the control portion drives both of the first and second heater portions until the temperature of the solder which the temperature-detecting portion detects reaches a predetermined temperature (for example, a melting point of the solder) or drives the first and second heater portions alternately after it has reached the predetermined temperature. This enables erosion by the solder to be prevented from occurring in a portion of the solder bath contacting the heater(s) by excessive heating which is generated by continuously turning the first and second heaters on electricity.

A jet solder bath according to the invention is a jet solder bath which flows molten solder by feeding and compressing means to spout it from a nozzle, **characterized in that** the bath comprises a bath main body portion that contains solder, a temperature-detecting portion that detects a temperature of the solder contained in the bath main body portion, a first heater portion that is provided on the bath main body portion and heats the bath main body portion, a second heater portion that is provided on the bath main body portion, is juxtaposed with the first heater portion and heats the bath main body portion, and a control portion that drives any one of the first and second heater portions until the temperature of the solder which the temperature-detecting portion detects reaches a predetermined temperature.

In the jet solder bath according to the invention, the temperature-detecting portion detects a temperature of the solder contained in the bath main body portion, the first heater portion is provided on the bath main body portion and heats the bath main body portion, and the second heater portion is provided on the bath main body portion, is juxtaposed with the first heater portion and heats the bath main body portion. On the assumption of this, the control portion drives any one of the first and second heater portions until the temperature of the solder which the temperature-detecting portion detects reaches a predetermined temperature. This can prevent an erosion by the solder from occurring in a portion of the solder bath contacting the heater by excessive heating which is generated by continuously turning on the first and second heater portions and enables consumed power of the corresponding jet solder bath to be reduced.

### Effects of the Invention

By the jet solder bath according to the present invention, it is possible to prevent the bath main body portion contacting the heaters from being heated more than necessary because the first and second heater portions are not always turned on when heating after the solder is melted, which is subject to occurrence in an increase of temperature at a heating portion of the heater, and to reduce the consumed power of the jet solder bath. Further, it is possible to prevent the erosion by heating from occurring in the solder bath.

### Brief Description of the Drawings

[FIG. 1] is a sectional front view of a jet solder bath 1 according to a first embodiment for showing a configuration example thereof.
[FIG. 2] is a sectional view of the jet solder bath 1 for showing a configuration example thereof, taken along lines A-A.
[FIG. 3] is a block diagram of a control system in the jet solder bath 1 for showing a configuration example thereof.
[FIG. 4] is a diagram of heaters H1a through H1f, H2a through H2f for showing a connection example thereof.
[FIG. 5A] is a circuit diagram of the heaters H1a through H1f for showing a connection example thereof.
[FIG. 5B] is a circuit diagram of the heaters H2a through H2f for showing a connection example thereof.
[FIG. 6] is a timing chart for showing an operation example of the heater portions H1 and H2.
[FIG. 7] is a timing chart for showing an operation example of the heater portions H1 and H2 according to a second embodiment.
[FIG. 8] is a timing chart for showing an operation example of the heater portions H1 and H2 according to a third embodiment.
[FIG. 9A] is a diagram for showing a comparison example of consumed power between the jet solder bath of this invention and a conventional jet solder bath.
[FIG. 9B] is a diagram for showing a comparison example of accumulated electric energy between the jet solder bath of this invention and a conventional jet solder bath.

### Best Mode for Carrying out the Invention

The following will describe one example of embodiments of a jet solder bath according to the present invention with reference to drawings.

### <First Embodiment>

In a jet solder bath 1 according to this embodiment, a thermocouple 30, which is an example of the temperature-detecting portion, detects a temperature of the solder 20 contained in the bath main body portion 2, the first heater portion (hereinafter, referred to as "heater portion H1") heats the bath main body portion 2, and the second heater portion (hereinafter, referred to as "heater portion H2") is provided near the heater portion H1 and heats the bath main body portion 2. On the assumption of this, a thermoregulation portion 40, which is an example of the control portion, drives both of the heater portions H1, H2 until the temperature of the solder 20 which the thermocouple 30 detects reaches a melting point thereof and drives any one of the heater portions H1, H2 after the temperature of the solder 20 has reached the melting point. This can prevent the bath main body portion 2 from being heated more than necessary and enables consumed power of the jet solder bath to be reduced.

### [Configuration Example of Jet Solder Bath 1]

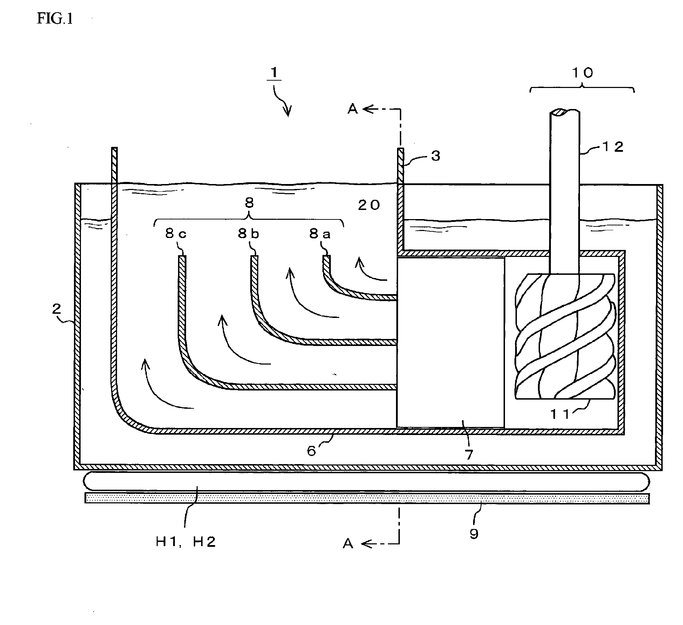

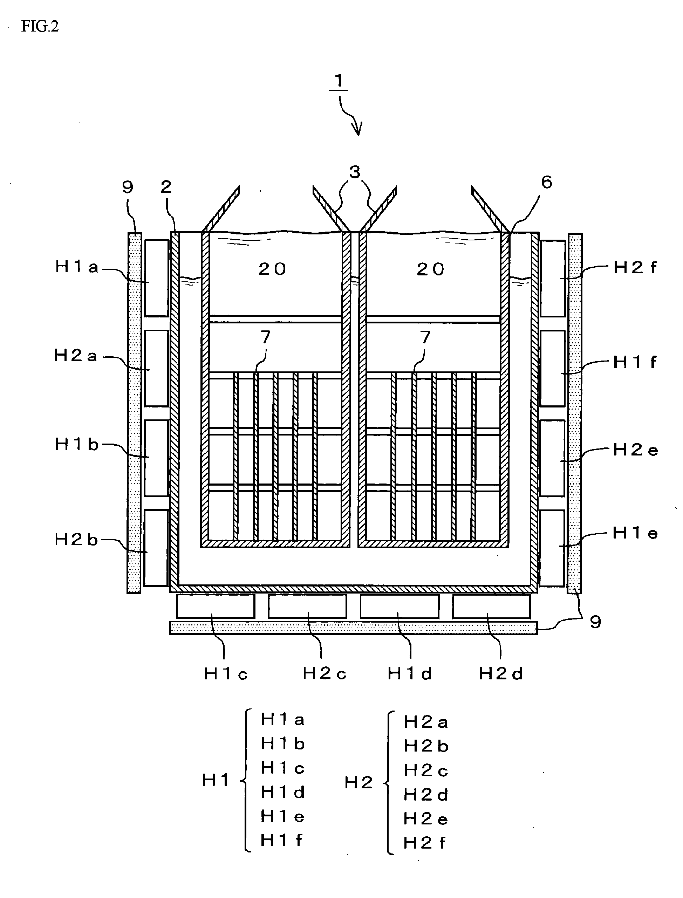

As shown in FIGS. 1 and 2, the jet solder bath 1 is constituted of the bath main body portion 2, the heater portion H1 and the heater portion H2. The heater portion H1 has heaters H1a, H1b, H1c, H1d, H1e, and H1f and the heater portion H2 has heaters H2a, H2b, H2c, H2d, H2e, and H2f.

The bath main body portion 2 is made of stainless steel which is constituted of Fe, Ni, Cr and the like. Nitriding is performed on a surface of this stainless steel. The nitriding is a processing in which, for example, heated ammonia gas is dissolved into nitrogen which is blown upon the surface of the stainless steel to form a nitrogen film on the surface thereof. In the jet solder bath 1, a portion in which erosion occurs is not only the vicinity of heater portions which locally becomes high temperature but also a portion which the solder 20 contacts with great strength. Such a portion which the solder 20 contacts with great strength is a duct portion 6, an impeller 11, partition plates 7, interchanging plates 8 and a nozzle portion 3, which will be described later. Therefore, the above-mentioned nitriding is performed on the duct portion 6, the impeller 11, the partition plates 7, the interchanging plates 8 and the nozzle portion 3.

The solder 20 is contained in the bath main body portion 2. The solder 20 is, for example, lead-free solder and has a composition such as Sn-Ag-Cu, Sn-Zn-Bi or the like. A pump portion 10, the duct portion 6 and the nozzle portion 3 are provided in the bath main body portion 2. The jet solder bath 1 is operated so that the solder 20 contained in the bath main body portion 2 is passed through the duct portion 6 by the pump portion 10 and from the nozzle portion 3, the solder 20 is spouted to a printed circuit board, not shown.

On outer side of the bath main body portion 2, heaters H1a through H1f and H2a through H2f are provided. As the heaters H1a through H1f and H2a through H2f, for example, electric heaters or the like are used. The heaters H1a through H1f and the heaters H2a through H2f are provided so as to come close to each other and are alternately arranged so as to be attached to the bath main body portion 2. Namely, on a left side surface of the bath main body portion 2 shown in FIG. 2, the heater H1a, the heater H2a, the heater H1b and the heater H2b are attached in this order; on a bottom surface of the bath main body portion 2, the heater H1c, the heater H2c, the heater H1d and the heater H2d are attached in this order; and on a right side surface of the bath main body portion 2, the heater H1e, the heater H2e, the heater H1f and the heater H2f are attached in this order. The heaters H1a through H1f and H2a through H2f heat the bath main body portion 2 to melt the solder 20.

The heaters H1a through H1f and H2a through H2f are covered by heat-insulating member 9. The heat-insulating member 9 has a function such that heat generated from the heaters H1a through H1f and H2a through H2f is not escaped to outside. For the heat-insulating member 9, for example, material, for example, glass wool or the like which is not melted even at 500 °C is utilized. This enables the heat from the heaters H1a through H1f and H2a through H2f to be efficiently transferred to the bath main body portion 2, thereby allowing a period of time for melting the solder 20 to be shortened.

The pump portion 10 has a motor, not shown, the impeller 11 and a shaft 12. If the motor starts, the impeller 11 rotates via the shaft 12 to feed and compress the solder 20 which is melted by heating of the heaters H1a through H1f and H2a through H2f so that the corresponding solder 20 flows into the duct portion 6 from a predetermined flowing direction.

In the duct portion 6, at least one partition plates 7 are provided from a bottom of the corresponding duct portion 6 up to an upper portion thereof so that they are in parallel with the flowing direction (for example, in this embodiment, five partition plates stand). These partition plates 7 have function to partition inside of the duct portion 6 into plural ones so as to allow a flux and an amount of flowed solder 20 to be made more uniform.

Further, in the duct portion 6, interchanging plates 8 are provided. These interchanging plates 8 have main bodies 8a, 8b, 8c of the interchanging plates and as shown in FIG. 1, the main bodies 8a, 8b, 8c of the interchanging plates are formed like an arc so that one ends of the main bodies 8a, 8b, 8c of the interchanging plates are provided on one ends of the partition plates 7 and the other ends of the main bodies 8a, 8b, 8c of the interchanging plates extend toward the nozzle portion 3.

The main bodies 8a, 8b, 8c of the interchanging plates respectively have different lengths and are formed so that they extend longer (8a<8b<8c), for example, from the near side (right side in FIG. 1) of the duct portion 6 to the back side (left side in FIG. 1) thereof successively. Further, the one ends of the main bodies 8a, 8b, 8c of the interchanging plates have different levels provided in the duct portion 6 and they are provided so that their levels become lower (8c<8b<8a), for example, from the near side of the duct portion 6 to the back side thereof successively.

The interchanging plates 8 have a function to change a direction of the solder 20 passed through the partition plates 7 to an upward direction thereof toward the nozzle portion 3. Since the main bodies 8a, 8b, 8c of the interchanging plates have an arc, the solder 20 comes into collision with the main bodies 8a, 8b, 8c of the interchanging plates to enable a flow of the solder 20 to become weaker, thereby allowing a flux and an amount of flowed solder 20 to be made more stable.

The nozzle portion 3 is provided on the interchanging plates 8. The nozzle portion 3 spouts the solder 20, a flux and an amount of which are made more stable by the interchanging plates 8, to a printed circuit board, not shown. Since the solder 20 spouted from the nozzle portion 3 has stability of the flux and the amount thereof, a level of the spout is made uniform. This enables solder bridge in which the solder is adhered to a position except for a predetermined position of the printed circuit board or insufficient solder in which no solder is adhered to a predetermined position thereof to be reduced.

### [Configuration Example of Control system in Jet Solder Bath 1]

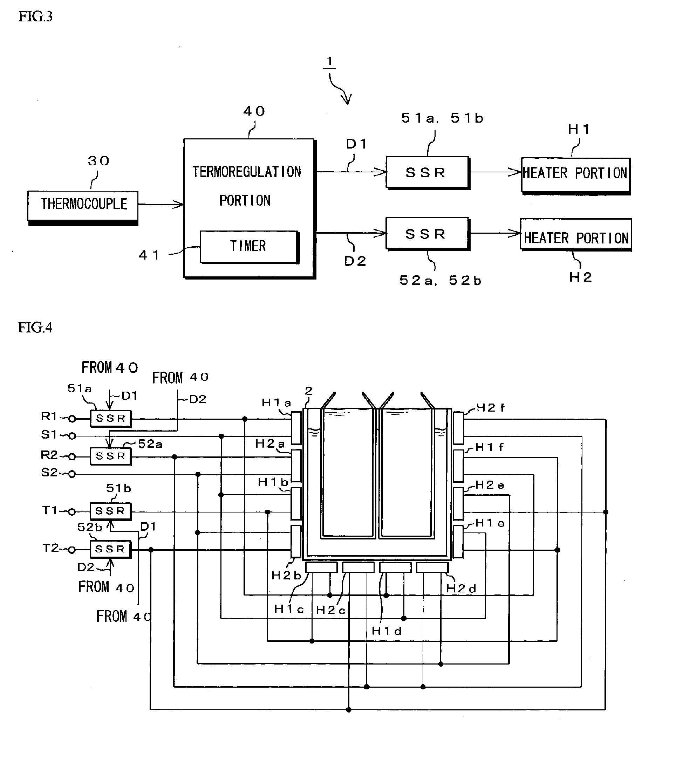

Next, the following will describe a configuration example of a control system in the jet solder bath 1. As shown in FIG. 3, the jet solder bath 1 is constituted of a thermocouple 30, a thermoregulation portion 40, first relay circuits (hereinafter, referred to as "SSR 51a, 51b"), second relay circuits (hereinafter, referred to as "SSR 52a, 52b") and heater portions H1, H2.

The thermocouple 30 detects a temperature of the solder 20 contained in the bath main body portion 2. To the thermocouple 30, the thermoregulation portion 40 is connected. The thermoregulation portion 40 has a function to regulate the temperature of the solder 20. The thermoregulation portion 40 outputs output signals D1, D2 to the SSR 51a, 51b, 52a, 52b based on the temperature of the solder 20, which is detected by the thermocouple 30, to perform on-off control of the heater portions H1, H2.

Further, the thermoregulation portion 40 has a timer 41 and may output the output signals D1, D2 to the SSR 51a, 51b, 52a, 52b every predetermined time which is set by the timer 41 to perform on-off control of the heater portions H1, H2. The set time by the timer 41 can be set to a desired time. For example, when the set time by the timer 41 is 2 through 10 minutes, the thermoregulation portion 40 alternately drives the heater portions H1, H2 every two through 10 minutes. This enables the erosion by the heated solder 20 in the bath main body portion 2 to be prevented. Alternatively, when the set time by the timer 41 is 2 through 10 seconds, it alternately drives the heater portions H1, H2 every two through 10 seconds. This enables life spans of the heater portions H1, H2 to be elongated so that a frequency of replacement of the corresponding heater portions H1, H2 is decreased.

To the thermoregulation portion 40, SSR 51a, 51b and SSR 52a, 52b are respectively connected. The SSR 51a, 51b receive the output signal D1 output from the thermoregulation portion 40 and the SSR 52a, 52b receive the output signal D2 output from the thermoregulation portion 40. The SSR 51a, 51b, when receiving the output signal D1, switch heater circuits constituting the heater portion H1 to turn them on or off. Alternatively, the SSR 52a, 52b, when receiving the output signal D2, switch heater circuits constituting the heater portion H2 to turn them on or off.

To the SSR 51a, 51b, the heater portion H1 is connected and to the SSR 52a, 52b, the heater portion H2 is connected. When the heater circuit of the heater portion H1 is switched on by the SSR 51a, 51b, the heater circuit is turned on so that the heater portion H1 heats. Alternatively, when the heater circuit of the heater portion H1 is switched off by the SSR 51a, 51b, the heater circuit is shut off so that it does not heat. When the heater circuit of the heater portion H2 is switched on by the SSR 52a, 52b, the heater circuit is turned on so that the heater portion H2 heats. Alternatively, when the heater circuit of the heater portion H2 is switched off by the SSR 52a, 52b, the heater circuit is shut off so that it does not heat.

### [Configuration Example of Heater Circuit]

Next, the following will describe a configuration example of the heater circuit of the jet solder bath 1. As shown in FIG. 4, heaters H1a through H1f and heaters H2a through H2f are alternately provided on the vicinity of the bath main body portion 2 containing the solder 20.

To a terminal R1, an end of the heater H1a, the other end of the heater H1c, an end of the heater H1d and the other end of the heater H1f are respectively connected via the SSR 51a. The SSR 51a is connected to the thermoregulation portion 40 and receives the output signal D1 from the thermoregulation portion 40. To a terminal S1, the other end of the heater H1a, an end of the heater H1b, the other end of the heater H1d and an end of the heater H1e are respectively connected.

To a terminal R2, an end of the heater H2a, the other end of the heater H2c, an end of the heater H2d and the other end of the heater H2f are respectively connected via the SSR 52a. The SSR 52a is connected to the thermoregulation portion 40 and receives the output signal D2 from the thermoregulation portion 40. To a terminal S2, the other end of the heater H2a, an end of the heater H2b, the other end of the heater H2d and an end of the heater H2e are respectively connected.

To a terminal T1, the other end of the heater H1b, an end of the heater H1c, the other end of the heater H1e and an end of the heater H1f are respectively connected via the SSR 51b. The SSR 51b is connected to the thermoregulation portion 40 and receives the output signal D1 from the thermoregulation portion 40. To a terminal T2, the other end of the heater H2b, an end of the heater H2c, the other end of the heater H2e and an end of the heater H2f are respectively connected via SSR 52b. The SSR 52b is connected to the thermoregulation portion 40 and receives the output signal D2 from the thermoregulation portion 40.

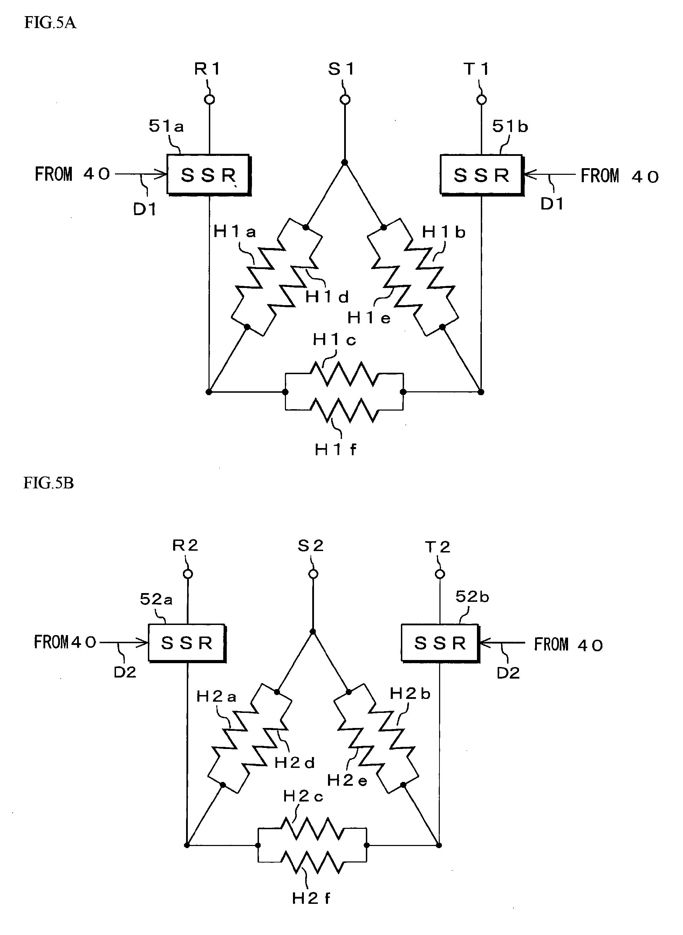

As shown in FIGS. 5A and 5B, the heaters H1a through H1f and H2a through H2f are illustrated as electrical resistances and they are connected to each other using delta connection. The terminals, R1, R2, S1, S2, T1, T2 are connected to three-phase alternative current power supply device, not shown, and from the three-phase alternative current power source device, power source is supplied to the terminals, R1, R2, S1, S2, T1, T2.

By such connection, the thermoregulation portion 40 drives the heaters H1a through H1f, H2a through H2f to heat by turning on the electricity among the terminals R1, S1, T1, R2, S2, T2 with the SSR 51a, 51b, 52a, 52b based on the output signals D1, D2 from the corresponding thermoregulation portion 40.

### [Operation Example of Heater Portions H1, H2]

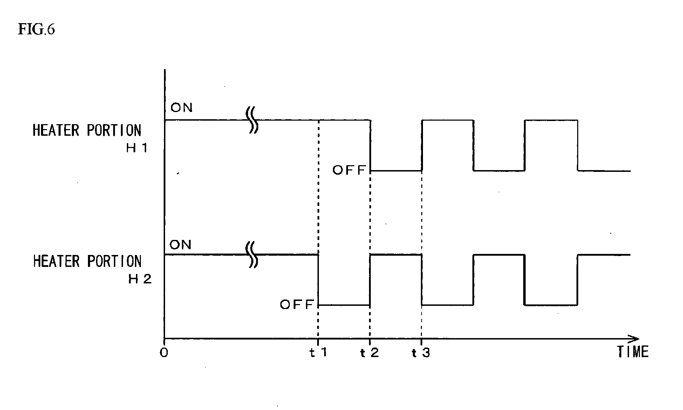

Next, the following will describe an operation example of the heater portions H1, H2. First, a power source of the jet solder bath 1 is switched on and a temperature of the solder 20 is set by an operation panel, not shown. When setting the temperature of the solder 20, as shown in FIG.6, both of the heater portions H1, H2 are switched on (are driven) and the heater portions H1, H2 are heated so that the solder 20 contained in the bath main body portion 2 is melted. When, as described on FIG. 3, detecting by the thermocouple 30 that the temperature of the solder 20 is heated up to a predetermined temperature (for example, a melting point of the solder 20), the thermoregulation portion 40 outputs the output signal D2 to the SSR 52a, 52b so that the heater portion H2 is switched off (releases its driving) at time t1. The SSR 52a, 52b then shut off the heater circuit at a side of the heater portion H2 to switch the heater portion H2 off.

When going to a time t2 and a predetermined time set by the timer 41 provided in the thermoregulation portion 40 has elapsed, the thermoregulation portion 40 switches the heater portion H1 off and switches the heater portion H2 on. Namely, the thermoregulation portion 40 outputs the output signal D1 to the SSR 51a, 51b so that the heater portion H1 is turned off. The SSR 51a, 51b then shut off the heater circuit to turn the heater portion H1 off. Further, the thermoregulation portion 40 outputs the output signal D2 to the SSR 52a, 52b so that the heater portion H2 is turned on. The SSR 52a, 52b then turn on the heater circuit to switch the heater portion H2 on.

When going to a time t3 and a predetermined time set by the timer 41 has elapsed, the thermoregulation portion 40 switches the heater portion H1 on and switches the heater portion H2 off. Namely, the thermoregulation portion 40 outputs the output signal D1 to the SSR 51a, 51b so that the heater portion H1 is turned on. The SSR 51a, 51b then turn on the heater circuit to switch the heater portion H1 on. Further, the thermoregulation portion 40 outputs the output signal D2 to the SSR 52a, 52b so that the heater portion H2 is turned off. The SSR 52a, 52b then shut off the heater circuit to switch the heater portion H2 off. Thus, by driving the heater portions H1, H2 alternately, the thermoregulation portion 40 can prevent heat in excess from being supplied to the bath main body portion 2.

As described above, in the jet solder bath 1 according to the first embodiment, the thermoregulation portion 40 drives both of the heater portions H1, H2 until the solder 20 contained in the bath main body portion 2 is sufficiently heated and drives any one of the heater portions H1, H2 after the solder 20 is sufficiently heated. This may prevent the bath main body portion 2 providing with the heater portions H1, H2 from being heated more than necessary, thereby allowing consumed power of the jet solder bath to be reduced.

As a result thereof, it is possible to prevent the erosion by the heated solder 20 in the bath main body portion 2. Further, since the heater portions H1, H2 are not always turned on the electricity, an additional effect is also obtained such that the life scans of the corresponding heater portions H1, H2 are elongated so that a frequency of replacement of the heater portions H1, H2 can be decreased, thereby resulting in cost reduction.

It is to be noted that the jet solder bath providing with two heater portions has been described in this embodiment, which is not limited: three heater portions or more may be provided.

Further, it has been described in this embodiment that both of the heater portions H1, H2 are driven until the temperature of the solder reaches a predetermined temperature and any one of the heater portions H1, H2 is driven after the temperature of the solder reaches the predetermined temperature, which is not limited: any one of the heater portions H1, H2 may be driven until the temperature of the solder reaches the predetermined temperature. This enables consumed power of the corresponding jet solder bath to be reduced (see Executed Example 1, which will be described later, more in detail).

### <Second Embodiment>

In this embodiment, the following will describe an operation example of the heater portions H1, H2 in which a fixed period of pause is set in the driving of the heater portions H1, H2. In the second embodiment, names and codes like those of the above-mentioned embodiment have the same functions so that the description thereof will be omitted.

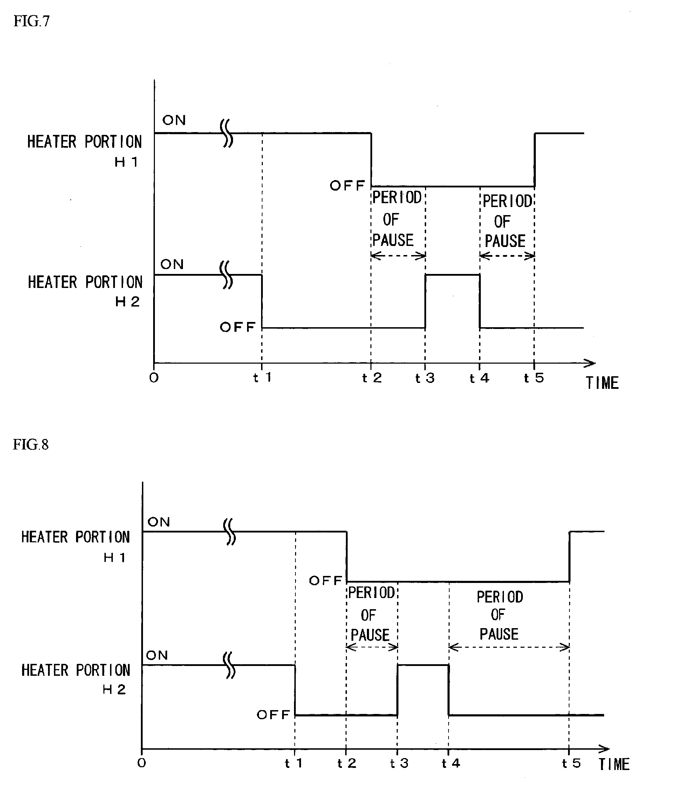

When a temperature of the solder 20 is set by an operation panel, as shown in FIG. 7, both of the heater portions H1, H2 are switched on and the heater portions H1, H2 are heated so that the solder 20 contained in the bath main body portion 2 is melted. When detecting by the thermocouple 30 that the temperature of the solder 20 is heated up to a predetermined temperature (for example, a melting point of the solder 20), the thermoregulation portion 40 outputs the output signal D2 to the SSR 52a, 52b so that the heater portion H2 is switched off at time t1. The SSR 52a, 52b then shut off the heater circuit at a side of the heater portion H2 to switch the heater portion H2 off.

When going to a time t2 and a predetermined time set by the timer 41 has elapsed, the thermoregulation portion 40 switches the heater portion H1 on. There becomes a period of pause from the time t2 to a time t3, when neither of the heater portions H1, H2 are driven. By setting such a period of pause, it is possible to restrict an excessive driving of the heater portions H1, H2 and it is possible to prevent the bath main body portion 2 from being heated more than necessary, thereby enabling consumed power of the jet solder bath to be reduced.

When going to a time t3 and a predetermined time set by the timer 41 has elapsed, the thermoregulation portion 40 switches the heater portion H2 on.

When going to a time t4 and a predetermined time set by the timer 41 has elapsed, the thermoregulation portion 40 switches the heater portion H2 off. There becomes a period of pause from the time t4 to a time t5, when neither of the heater portions H1, H2 are driven. A period of time from the time 2 to the time 3 and a period of time from the time 4 to the time 5 are the same period of time, which is suitably settable by the timer 41 so as to be a desired period of time.

When going to a time t5 and a predetermined time set by the timer 41 has elapsed, the thermoregulation portion 40 switches the heater portion H1 on. Thus, the thermoregulation portion 40 drives the heater portions H1, H2 alternately with fixed periods of pause when neither of the heater portions H1, H2 are driven being provided, and can prevent heat in excess from being supplied to the bath main body portion 2.

As described above, in the jet solder bath 1 according to the second embodiment, the thermoregulation portion 40 can prevent the bath main body portion 2 providing with heater portions H1, H2 from being heated more than necessary by providing the period of pause of the heater portions H1, H2 so that the consumed power of the jet solder bath can be reduced. Further, lift spans of the heater portions H1, H2 elongate and a frequency of replacement of the heater portions H1, H2 is decreased so that it is possible to reduce the costs thereof.

### <Third Embodiment>

In this embodiment, the following will describe an operation example of the heater portions H1, H2 in which unfixed periods of pause are set in the driving of the heater portions H1, H2. In the third embodiment, names and codes like those of the above-mentioned embodiments have the same functions so that the description thereof will be omitted.

When a temperature of the solder 20 is set by an operation panel, as shown in FIG. 8, both of the heater portions H1, H2 are switched on and the heater portions H1, H2 are heated so that the solder 20 contained in the bath main body portion 2 is melted. When detecting by the thermocouple 30 that the temperature of the solder 20 is heated up to a predetermined temperature (for example, a melting point of the solder 20), the thermoregulation portion 40 outputs the output signal D2 to the SSR 52a, 52b so that the heater portion H2 is switched off at time t1. The SSR 52a, 52b then shut off the heater circuit at a side of the heater portion H2 to switch the heater portion H2 off.

When going to a time t2, the thermoregulation portion 40 detects that the temperature of the solder 20 detected by the thermocouple 30 becomes higher than the temperature set with the operation panel and switches the heater portion H1 off. There becomes a period of pause from the time t2 to a time t3, when neither of the heater portions H1, H2 are driven. When going to a time t3, the thermoregulation portion 40 detects that the temperature of the solder 20 detected by the thermocouple 30 becomes lower and switches the heater portion H2 on.

When going to a time t4, the thermoregulation portion 40 detects that the temperature of the solder 20 detected by the thermocouple 30 becomes higher than the temperature set with the operation panel and switches the heater portion H2 off. There becomes a period of pause from the time t4 to a time t5, when neither of the heater portions H1, H2 are driven. A period of time from the time 2 to the time 3 and a period of time from the time 4 to the time 5 are fixed by comparing the temperature of the solder 20 detected by the thermocouple 30 with the temperature set with the operation panel by the thermoregulation portion.

When going to a time t5, the thermoregulation portion 40 detects that the temperature of the solder 20 detected by the thermocouple 30 becomes higher than the temperature set with the operation panel and switches the heater portion H1 on. Thus, the thermoregulation portion 40 drives the heater portions H1, H2 alternately with periods of pause being provided in the heater portions H1, H2 so that the temperature of the solder 20 becomes the temperature set with the operation panel and can prevent heat in excess from being supplied to the bath main body portion 2.

As described above, in the jet solder bath 1 according to the third embodiment, the thermoregulation portion 40 can prevent the bath main body portion 2 providing with periods of pause in the heater portions H1, H2 from being heated more than necessary by observing the temperature of the solder 20 detected by the thermocouple 30 so that the temperature of the solder 20 becomes the temperature set with the operation panel, thereby enabling the consumed power of the jet solder bath to be reduced. Further, lift spans of the heater portions H1, H2 elongate and a frequency of replacement of the heater portions H1, H2 is decreased so that it is possible to reduce the costs thereof.

### <Executed Example 1>

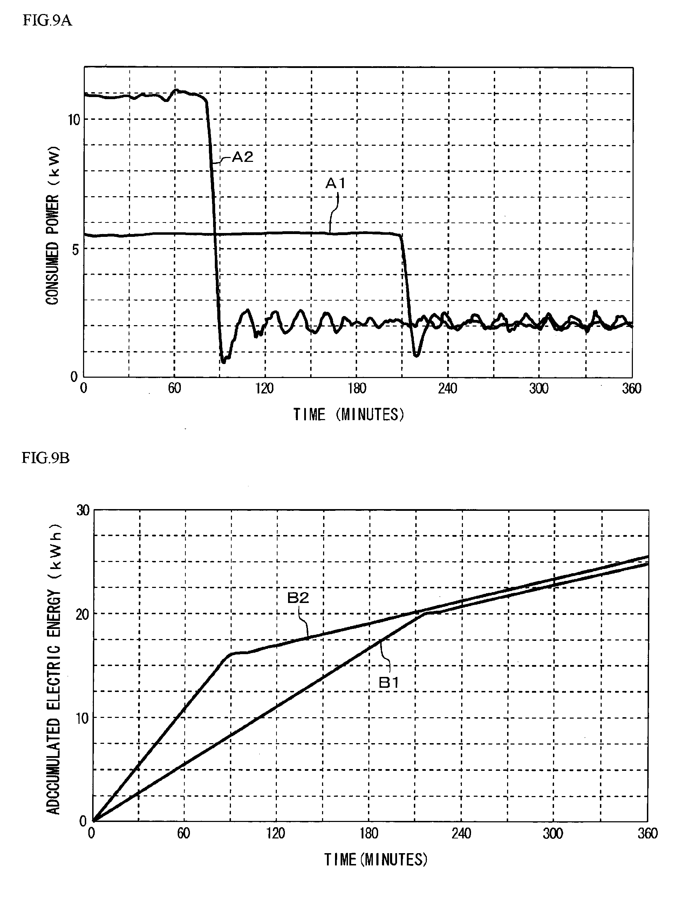

Next, the following will describe a measurement result of consumed power between the jet solder bath according to the invention and the conventional jet solder bath. FIG. 9A is a diagram for showing a comparative example of the consumed power between the jet solder bath according to the invention and the conventional jet solder bath when a vertical axis is a total of consumed power (kW) of the heater portions H1, H2 and a horizontal axis is an elapsed time (minute(s)) from a point of time when any one of the heater portions H1, H2 or both thereof are switched on. In FIG. 9A, "A1" indicates a characteristic of the jet solder bath according to the invention and "A2" indicates a characteristic of the conventional jet solder bath.

The jet solder bath according to the invention is set by the timer 41 so that the heater portions H1, H2 are switched on/off alternately every 5 seconds from a point of power-on time. Regarding such switching-on/off, it is preferable to switch them within 60 seconds, much preferable to switch them between 5 and 10 seconds. On the other hand, the conventional jet solder bath is set so that both of the heater portions H1, H2 are always switched on from a point of power-on time.

As shown in the characteristic A1 of the jet solder bath according to the invention of FIG. 9A, from 0 minutes up to 210 minutes, in order to melt the solder, the heater portions H1, H2 heat the corresponding jet solder bath alternately up to a predetermined temperature. After 210 minutes, that of the solder reaches the predetermined temperature and the thermoregulation portion 40 controls the heater portion H1, H2 so as to decrease output of the heater portion H1, H2.

As shown in the characteristic A2 of the conventional jet solder bath, from 0 minutes up to 80 minutes, in order to melt the solder, both of the heater portions H1, H2 heat the corresponding jet solder bath up to a predetermined temperature. After 80 minutes, that of the solder reaches the predetermined temperature and the thermoregulation portion 40 controls the heater portions H1, H2 so as to decrease output of the heater portion H1, H2.

FIG. 9B is a diagram for showing a comparative example of accumulated electric energy between the jet solder bath according to the invention and the conventional jet solder bath when a vertical axis is a total of the accumulated electric energy (kWh) of the heater portions H1, H2, which is obtained from the consumed power shown in FIG. 9A, and a horizontal axis is an elapsed time (minute(s)) from a point of time when any one of the heater portions H1, H2 or both thereof are switched on. In FIG. 9B, "B1" is a characteristic of the jet solder bath according to the invention and "B2" is a characteristic of the conventional jet solder bath.

As shown in the characteristic B1 of the jet solder bath according to the invention of FIG. 9B, from 0 minutes up to 220 minutes, the accumulated electric energy increases at the rate of about 94 Wh per minute and after 220 minutes, the accumulated electric energy increases at the rate of about 35 Wh per minute. As shown in the characteristic B2 of the conventional jet solder bath, from 0 minutes up to 90 minutes, the accumulated electric energy increases at the rate of about 193 Wh per minute and after 90 minutes, the accumulated electric energy increases at the rate of about 36.7 Wh per minute.

When comparing their accumulated electric energies within a period of time, from 300 to 360 minutes, when both of the jet solder bath according to the invention and the conventional jet solder bath become stable, the accumulated electric energy of the jet solder bath according to the invention becomes about 2.1 kWh/hour and the accumulated electric energy of the conventional jet solder bath becomes about 2.2 kWh/hour. Namely, the accumulated electric energy of the jet solder bath according to the invention shows decrease of about 0.1 kWh/hour against the conventional one.

Thus, the jet solder bath according to the invention can decrease the consumed power of the corresponding jet solder bath by switching the heater portions on/off alternately.

### Industrial Applicability

It is very preferable to apply this invention to the jet solder bath that spouts molten solder to a printed circuit board and forms solder on a predetermined position of the printed circuit board.

### Description of Codes

1...Jet Solder Bath; 2...Bath Main Body Portion; 3...Nozzle Portion; 6...Duct Portion; 7...Partition Plates; 8...Interchanging Plates; 9...Heat-insulating Member; 10...Pump Portion; 20...Solder; 30...Thermocouple (Temperature-detecting Portion); 40...Thermoregulation Portion (Control Portion); 41...Timer; 51a, 51b...First Relay Circuit; 52a, 52b...Second Relay Circuit; H1...First Heater Portion; H2...Second Heater Portion; H1a, H1b, H1c, H1d, H1e, H1f, H2a, H2b, H2c, H2d, H2e, H2f...Heater.

## Claims

1. A jet solder bath (1) which flows molten solder (20) by feeding and compressing means (10) to spout it from a nozzle (3), comprising:
a bath main body portion (2) that contains solder (20);
a temperature-detecting portion (30) that detects a temperature of the solder (20) contained in the bath main body portion (2);
a first heater portion (H1) that is provided on the bath main body portion (2) and heats the bath main body portion (2);
a second heater portion (H2) that is provided on the bath main body portion (2), is juxtaposed with the first heater portion (H1) and heats the bath main body portion (2); and
a control portion (40) that drives both of the first and second heater portions (H1, H2) until the temperature of the solder (20) which the temperature-detecting portion (30) detects reaches a predetermined temperature; **characterized in that** the control portion (40) drives the first and second heater portions (H1,H2) alternately after it has reached the predetermined temperature.

2. A jet solder bath according to claim 1, wherein in the step of driving the first and second heater alternately,
the control portion (40) drives the first or the second heater portions (H1, H2) until the temperature of the solder which the temperature-detecting portion detects reaches a predetermined temperature.

3. The jet solder bath according to Claim 1 or 2, **characterized in that** the first and second heater portions respectively have plural heaters (H1a-f; H2a-f); and
the heaters (H1a-f) of the first heater portion (H1) and the heaters (H2a-f) of the second heater portion (H2) are alternately arranged on the periphery of the bath main body portion (2).

4. The jet solder bath according to Claim 1, **characterized in that** a timer (41) is provided in the control portion (40), and the control portion (40) drives the first and second heater portions (H1, H2) alternately every predetermined time set by the timer (41).

5. The jet solder bath according to Claim 4, **characterized in that** the predetermined time is two through ten minutes.

6. The jet solder bath according to Claim 4, **characterized in that** the predetermined time is two through ten seconds.

7. The jet solder bath according to Claim 1 or 2, **characterized in that** nitriding is performed on a surface of the bath main body portion (12).

8. The jet solder bath according to Claim 1 or 2, **characterized in that** heat-insulating material (9) is provided in the first and second heater portions (H1, H2).

## Patentansprüche

1. Düsenlötbad (1), das geschmolzenes Lot (20) durch Zuführ- und Kompressionsmittel (10) zum Ausgeben aus einer Düse (3) strömen lässt, umfassend:
einen Badhauptkörperabschnitt (2), der ein Lot (20) enthält;
einen Temperaturerfassungsabschnitt (30), der eine Temperatur des Lots (20) erkennt, das in dem Badhauptkörperabschnitt (2) enthalten ist;
einen ersten Erwärmungsabschnitt (H1), der an dem Badhauptkörperabschnitt (2) bereitgestellt ist und den Badhauptkörperabschnitt (2) erwärmt;
einen zweiten Erwärmungsabschnitt (H2), der an dem Badhauptkörperabschnitt bereitgestellt ist und den Badhauptkörperabschnitt (2) erwärmt und gegenüber dem ersten Erwärmungsabschnitt (H1) angeordnet ist und den Badhauptkörperabschnitt (2) erwärmt;
einen Steuerabschnitt (40), der sowohl den ersten und den zweiten Erwärmungsabschnitt (H1, H2) antreibt, bis die Temperatur des Lots (20), die von dem Temperaturerfassungsabschnitt (30) erkannt wird, eine vorbestimmte Temperatur erreicht; und **dadurch gekennzeichnet, dass** der Steuerabschnitt (40) den ersten und den zweiten Erwärmungsabschnitt (H1, H2) abwechselnd antreibt, nachdem dieser die vorbestimmte Temperatur erreicht hat.

2. Düsenlötbad nach Anspruch 1, wobei während des Schrittes des abwechselnden Antreibens des ersten und des zweiten Erwärmungsabschnitts der Steuerabschnitt (40) den ersten oder den zweiten Erwärmungsabschnitt (H1, H2) antreibt, bis die Temperatur des Lots, die von dem Temperaturerfassungsabschnitt erkannt wird, eine vorbestimmte Temperatur erreicht.

3. Düsenlötbad nach Anspruch 1 oder 2, **dadurch gekennzeichnet, dass** der erste bzw. der zweite Erwärmungsabschnitt jeweils mehrere Heizer (H1a-f; H2a-f) aufweisen; und dadurch, dass
die Heizer (H1a-f) des ersten Erwärmungsabschnitts (H1) und die Heizer (H2a-f) des zweiten Erwärmungsabschnitts (H2) abwechselnd auf dem Umfang des Badhauptkörperabschnitts (2) angeordnet sind.

4. Düsenlötbad nach Anspruch 1, **dadurch gekennzeichnet, dass** ein Zeitgeber (41) in dem Steuerabschnitt (40) bereitgestellt ist; und dadurch, dass der Steuerabschnitt (40) den ersten und den zweiten Erwärmungsabschnitt (H1, H2) abwechselnd zu jeder vorbestimmten Zeit antreibt, die von dem Zeitgeber (41) eingestellt wurde.

5. Düsenlötbad nach Anspruch 4, **dadurch gekennzeichnet, dass** die vorbestimmte Zeit zwei bis zehn Minuten beträgt.

6. Düsenlötbad nach Anspruch 4, **dadurch gekennzeichnet, dass** die vorbestimmte Zeit zwei bis zehn Sekunden beträgt.

7. Düsenlötbad nach Anspruch 1 oder 2, **dadurch gekennzeichnet, dass** das Nitrierhärten auf einer Oberfläche des Badhauptkörperabschnitts (2) durchgeführt wird.

8. Düsenlötbad nach Anspruch 1 oder 2, **dadurch gekennzeichnet, dass** wärmeisolierendes Material (9) in dem ersten und dem zweiten Erwärmungsabschnitt (H1, H2) bereitgestellt ist.

## Revendications

1. Bain (1) de métal d'apport pour brasage à jet, faisant s'écouler du métal (20) d'apport en fusion par des moyens (10) d'amenée et de compression pour le projeter à partir d'une buse (3), comportant :
une partie (2) de corps principal de bain qui contient du métal (20) d'apport ;
une partie (30) de détection de température qui détecte une température du métal (20) d'apport contenu dans la partie (2) de corps principal de bain ;
une première partie (H1) de chauffage qui est installée sur la partie (2) de corps principal de bain et chauffe la partie (2) de corps principal de bain ;
une deuxième partie (H2) de chauffage qui est installée sur la partie (2) de corps principal de bain, est juxtaposée avec la première partie (H1) de chauffage et chauffe la partie (2) de corps principal de bain ; et
une partie (40) de commande qui actionne à la fois les première et deuxième parties (H1, H2) de chauffage jusqu'à ce que la température du métal (20) d'apport que détecte la partie (30) de détection de température atteigne une température prédéterminée ; **caractérisé en ce que** la partie (40) de commande actionne alternativement les première et deuxième parties (H1, H2) de chauffage après qu'elle a atteint la température prédéterminée.

2. Bain de métal d'apport pour brasage à jet selon la revendication 1,
la partie (40) de commande, lors de l'étape consistant à actionner alternativement les première et deuxième parties de chauffage, actionne la première ou la deuxième partie (H1, H2) de chauffage jusqu'à ce que la température du métal d'apport que détecte la partie de détection de température atteigne une température prédéterminée.

3. Bain de métal d'apport pour brasage à jet selon la revendication 1 ou 2, **caractérisé en ce que** les première et deuxième parties de chauffage comprennent respectivement une pluralité de dispositifs (H1a-f, H2a-f) de chauffage ; et
**en ce que** les dispositifs (H1a-f) de chauffage de la première partie (H1) de chauffage et les dispositifs (H2a-f) de chauffage de la deuxième partie (H2) de chauffage sont disposés alternativement sur la périphérie de la partie (2) de corps principal de bain.

4. Bain de métal d'apport pour brasage à jet selon la revendication 1, **caractérisé en ce qu'**un temporisateur (41) est installé dans la partie (40) de commande et **en ce que** la partie (40) de commande actionne alternativement les première et deuxième parties (H1, H2) de chauffage chaque fois qu'une durée prédéterminée fixée par le temporisateur (41) s'écoule.

5. Bain de métal d'apport pour brasage à jet selon la revendication 4, **caractérisé en ce que** la durée prédéterminée est de deux à dix minutes.

6. Bain de métal d'apport pour brasage à jet selon la revendication 4, **caractérisé en ce que** la durée prédéterminée est de deux à dix secondes.

7. Bain de métal d'apport pour brasage à jet selon la revendication 1 ou 2, **caractérisé en ce qu'**une nitruration est effectuée sur une surface de la partie (2) de corps principal de bain.

8. Bain de métal d'apport pour brasage à jet selon la revendication 1 ou 2, **caractérisé en ce qu'**un matériau (9) d'isolation thermique est installé dans les première et deuxième parties (H1, H2) de chauffage.
